# EUROPEAN PATENT APPLICATION

(11) **EP 4 678 948 A1**
(43) Date of publication of application: **14.01.2026**
(21) Application number: 24187158.1
(22) Date of filing: 08.07.2024
(51) Int. Cl.: F16H 59/68, F16H 61/12, F16H 63/50, F16H 59/46

(54) **METHOD TO CONTROL A POWERTRAIN OF A VEHICLE, COMPUTER PROGRAM PRODUCT, COMPUTER READABLE MEDIUM, CONTROLLER, POWERTRAIN, AND VEHICLE**

(71) Applicant: VOLVO TRUCK CORPORATION, 405 08 Göteborg (SE)
(72) Inventor: RIOS, Jean-Benoît, 69330 MEYZIEU (FR); ROGINE, Nicolas, 69160 TASSIN LA DEMI LUNE (FR); GRIVET, Christophe, 69250 MONTANAY (FR)
(74) Representative: Lavoix

(57) **Abstract**

A method to control a powertrain 7 of a vehicle 1, the powertrain comprising:
- a dog-clutch 17, comprising a primary part (19) and a secondary part (21),
- a controller (9), wherein the dog-clutch is configured to, upon receiving an order given by the controller, evolve to a desired configuration, between an engaged configuration and a disengaged configuration,
- a first speed sensor (20), configured to measure a physical quantity that reflects a rotation speed of the primary part, and
- a second speed sensor (22), configured to measure a physical quantity that reflects a rotation speed of the secondary part.

The method comprises a step of giving the order to evolve to the desired configuration, the order being given by the controller to the dog-clutch, and a step of checking, by the controller, whether the dog-clutch has actually evolved to the desired configuration.

## Description

### TECHNICAL FIELD

The disclosure relates generally to powertrains of vehicles. In particular aspects, the disclosure relates to method for controlling a powertrain of a vehicle, computer program product, computer readable medium, controller and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A known powertrain for a vehicle comprises a dog-clutch, for which a fork position sensor is implemented for detecting if the dog-clutch is correctly engaged or disengaged. However, in case the fork position sensor is faulty, an unsuccessful engagement or disengagement of the dog-clutch may not be detected. Moreover, there is a need for a cheaper, more compact and reliable dog-clutch, as the known fork position sensor takes up a lot of space and may get faulty over time.

### SUMMARY

According to a first aspect of the disclosure, a method to control a powertrain of a vehicle, the powertrain comprising:
- a dog-clutch, comprising:
   - a primary part, configured to be driven in rotation by an electric motor of the powertrain, and
   - a secondary part, configured to drive wheels of the vehicle,
- a controller, wherein the dog-clutch is configured to, upon receiving an order given by the controller, evolve to a desired configuration, between an engaged configuration in which the primary part and the secondary part are engaged with each other so as to be secured in rotation with each other and a disengaged configuration in which the primary part and the secondary part are disengaged from each other, enabling rotation of the primary part and the secondary part relative to each other,
- a first speed sensor, configured to measure a physical quantity that reflects a rotation speed of the primary part, and
- a second speed sensor, configured to measure a physical quantity that reflects a rotation speed of the secondary part.

The method comprises a step of giving the order to evolve to the desired configuration, the order being given by the controller to the dog-clutch, and a step of checking, by the controller, whether the dog-clutch has actually evolved to the desired configuration, as the order to evolve to the desired configuration was given to the dog-clutch by the controller, based on the physical quantities measured by the first and the second sensors.

The first aspect of the disclosure may seek to reduce the cost of a powertrain, by reducing the need of using a sensor such as a fork position sensor. A technical benefit may include improving the reliability of the dog-clutch by improving the reliability of the detection of an unwanted configuration of the dog-clutch.

Optionally in some examples, including in at least one preferred example, the step of checking further comprises:
- a step of giving a torque pulse instruction to the electric motor tending to decrease the rotation speed of the primary part, and
- a step of comparing a first speed difference to a second speed difference, wherein the first speed difference is a difference between the rotation speed of the primary part reflected by the physical quantity measured by the first sensor and the rotation speed of the secondary part reflected by the physical quantity measured by the second sensor before applying the torque pulse, and wherein the second speed difference is a difference between the rotation speed of the primary part and the rotation speed of the secondary part after applying the torque pulse.

A technical benefit may include more quickly detecting an unwanted configuration of the dog-clutch, by applying a brief torque variation to the motor, so that the speed differences may be quickly compared for determining if the dog-clutch reached the desired configuration. Another benefit is that any passenger or the driver of the vehicle will not feel the torque pulse, so that the variation of torque does not affect comfort..

Optionally in some examples, including in at least one preferred example, the step of checking further comprises:
- a step of determining that the dog-clutch is actually in the engaged configuration, if the first difference and the second difference are similar and tend towards zero, and
- a step of determining that the dog-clutch is actually in the disengaged configuration, if the first difference tends towards zero and the second difference is higher than the first difference.

A technical benefit may include reliably determining whether the dog-clutch has reached the desired configuration without relying on a fork position sensor.

Optionally in some examples, including in at least one preferred example, the method further comprises a step of waiting, after the step of giving the order, the step of checking being executed after the step of waiting. A technical benefit may include reliably determining whether the dog-clutch has reached the desired configuration, by avoiding that the detection is performed too early, while the dog-clutch did not have sufficient time for reaching the desired configuration.

Optionally in some examples, including in at least one preferred example when the desired configuration is the disengaged configuration, the method further comprises, before the step of giving the order, a step of lowering a torque of the electric motor. A technical benefit may include improving the chances that the desired configuration is actually reached.

Optionally in some examples, including in at least one preferred example, when the desired configuration is the engaged configuration, the method further comprises, before the step of giving the order, a step of driving the primary part by the electric motor so that the rotation speed of the primary part is equal to the rotation speed of the secondary part. A technical benefit may include improving the chances that the desired configuration is actually reached.

Optionally in some examples, including in at least one preferred example, when the step of checking has led to determine that the dog-clutch has not actually evolved to the desired configuration, the method further comprises:
- a step of giving an additional order to evolve to the desired configuration, the additional order being given by the controller to the dog-clutch, and
- after the step of giving the additional order, a step of additional checking, by the controller, whether the dog-clutch has actually evolved to the desired configuration, as the order to evolve to the desired configuration was given to the dog-clutch by the controller, based on the physical quantities measured by the first and the second sensors.

A technical benefit may include improving the chances that the desired configuration is actually reached with reduced need to rely on the fork position sensor.

Optionally in some examples, including in at least one preferred example, the step of checking includes that the controller does not rely on any other sensor than the first speed sensor and the second speed sensor for determining whether the dog-clutch has actually evolved to the desired configuration during the step of checking. A technical benefit may include reducing the overall bunk of the powertrain. Another technical benefit is to avoid relying on a mechanical sensor, such as a fork position sensor, which may tend to get faulty over time.

According to a second aspect of the disclosure, a powertrain for a vehicle comprising:
- a dog-clutch, comprising:
- a primary part, configured to be driven by an electric motor of the powertrain, and
- a secondary part, configured to drive to wheels of the vehicle,
- a controller, wherein the dog-clutch is configured to, upon receiving an order given by the controller, evolve to a desired configuration, between an engaged configuration in which the primary part and the secondary part are engaged with each other so as to be secured in rotation with each other and a disengaged configuration in which the primary part and the secondary part are disengaged from each other, enabling rotation of the primary part and the secondary part relative to each other,
- a first speed sensor, configured to measure a physical quantity that reflects a rotation speed of the primary part, and
- a second speed sensor, configured to measure a physical quantity that reflects a rotation speed of the secondary part,

The powertrain is configured to implement the method as defined above.

The second aspect of the disclosure may seek to optimize the cost of the powertrain, by reducing the need of using a sensor such as a fork position sensor. A technical benefit may include improving the reliability of the dog-clutch by improving the reliability of the detection of an unwanted configuration of the dog-clutch.

Optionally in some examples, including in at least one preferred example, the powertrain does not include another sensor than said first speed sensor and second speed sensor for the controller to determine the dog-clutch configuration during the step of checking.

Optionally in some examples, including in at least one preferred example, the powertrain is devoid of a fork position sensor. A technical benefit may include reducing the overall bunk of the powertrain. Another technical benefit is to avoid relying on a mechanical sensor, such as a fork position sensor, which may tend to get faulty over time.

Optionally in some examples, including in at least one preferred example, the powertrain includes a fork position sensor. A technical benefit may include improving the reliability of determining if the dog-clutch has reached the desired position, even if the fork position sensor is faulty or when conditions make it unreliable.

According to a third aspect of the disclosure, a vehicle comprising a powertrain as defined above. The third aspect of the disclosure may seek to optimize the cost of the powertrain, by reducing the need of using a sensor such as a fork position sensor. A technical benefit may include improving the reliability of the dog-clutch by improving the reliability of the detection of an unwanted configuration of the dog-clutch.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein controller, computer readable medium, and computer program product associated with the above discussed technical benefits.

### BRIEF DESCRIPTION OF THE DRAWINGS

Examples are described in more detail below with reference to the appended drawings.
**FIG. 1** is a schematic view of a vehicle according to an embodiment of the invention.
**FIG. 2** is a flowchart of an example of a method according to an embodiment of the invention.
**FIG. 3** shows a curve A of a torque of a motor depending on the time, a curve B of a rotation speed of a primary part depending on time and a curve C of a rotation speed of a secondary part depending on time, those being obtained when a dog-clutch evolves from an engaged configuration to a disengaged configuration.
**FIG. 4** shows a curve A of the torque of the motor depending on the time, a curve B of the rotation speed of the primary part depending on time and a curve C of the rotation speed of the secondary part depending on time, those being obtained when a dog-clutch stays in an engaged configuration.
**FIG. 5** shows a curve A of the torque of the motor depending on the time, a curve B of the rotation speed of the primary part depending on time and a curve C of the rotation speed of a secondary part depending on time, those being obtained when a dog-clutch evolves from a disengaged configuration to an engaged configuration.
**FIG. 6** shows a curve A of the torque of the motor depending on the time, a curve B of the rotation speed of the primary part depending on time and a curve C of the rotation speed of a secondary part depending on time, those being obtained when a dog-clutch stays in disengaged configuration.

### DETAILED DESCRIPTION

The detailed description set forth below provides information and examples of the disclosed technology with sufficient detail to enable those skilled in the art to practice the disclosure.

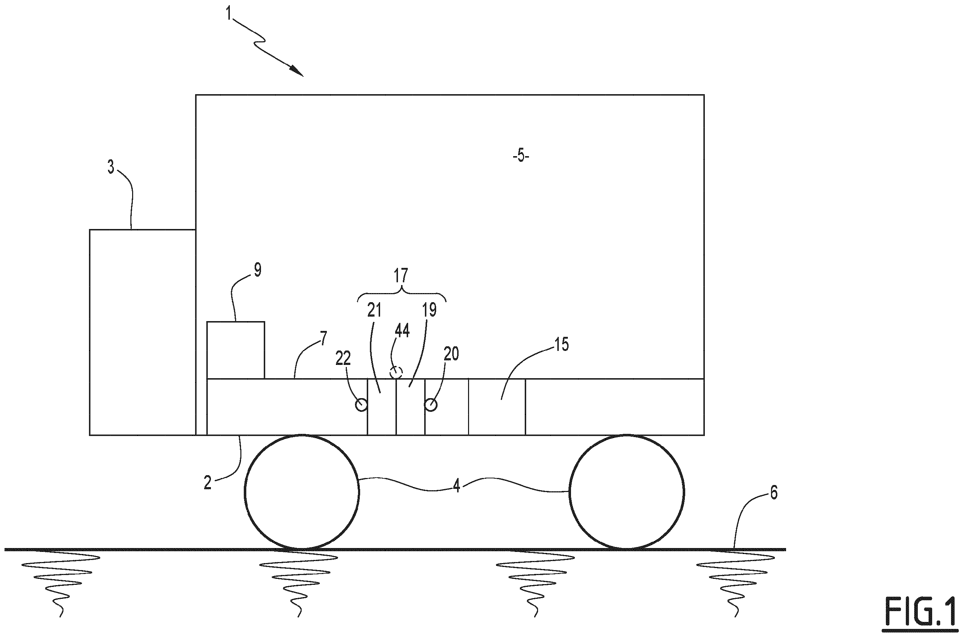

Figure 1 depicts a vehicle 1, comprising a frame 2, a driving cabin 3, wheels 4, a load compartment 5, a powertrain 7 and a controller 9, according to an embodiment of the invention.

The driving cabin 3 is supported by the frame 2 and positioned at the front of the vehicle 1. The vehicle 1 is drivable by a driver. The driver inside the driving cabin 3 controls the vehicle 1.

The wheels 4 are mounted on the frame 2 and configured to rotate to enable the movement of the vehicle 1 on a road 6.

The powertrain 7 comprises an electric motor 15. The motor 15 comprises an output shaft, not represented on the figures.

The powertrain 7 comprises a gearbox including one or more dog-clutches, in particular a dog-clutch 17. The dog-clutch 17 comprises a primary part 19, configured to be driven in rotation by the motor 15 and a secondary part 21, configured to drive the wheels 4. More precisely, an input of the gearbox is driven by the motor 15 for driving the primary part 19, and the secondary part 21 drives an output of the gearbox for driving the wheels 4. Overall, the motor 15 drives the wheels 4 through the gearbox.

The dog-clutch 17 is configured to, upon receiving an order given by the controller 9, evolve to a desired configuration, between an engaged configuration in which the primary part 19 and the secondary part 21 are engaged with each other so as to be secured in rotation with each other and a disengaged configuration in which the primary part 19 and the secondary part 21 are disengaged from each other, enabling rotation of the primary part 19 and the secondary part 21 relative to each other. For evolving between the engaged and disengaged configuration, the dog-clutch preferably comprises an actuator, such as a fork, for moving the parts 19 and 21 relative to each other. The order given by the controller 9 is sent for controlling the actuator.

In use, the dog-clutch 17 is preferably ordered to evolve from an initial configuration to the desired configuration when a gearbox ratio change is to be executed.

The output shaft rotates when the motor 15 is actuated. The rotation of the output shaft, when the dog-clutch is in the engaged configuration, drives the wheels 4. Doing so, the powertrain 7 provides a propulsion force to the vehicle 1 to propel the vehicle 1. The propulsion force is the result of a mechanical transformation by the powertrain 7 of a torque provided by the motor 15 to the output shaft.

The controller 9 is configured to control the powertrain 7 and more precisely to check the configuration of the dog-clutch 17.

The controller 9 is adapted to carry out a method for controlling the powertrain 7, such method being thus a computer-implemented method.

More generally, the controller 9 is a computer or computing system, or similar electronic computing device adapted to manipulate and/or transform parameter represented as physical, such as electronic, quantities within the computing system's registers and/or memories into other parameter similarly represented as physical quantities within the computing system's memories, registers or other such information storage, transmission or display devices.

The controller 9 comprises a processor. The processor comprises a processing unit, memories and a reader. The reader is adapted to read a computer readable medium.

The computer program product comprises a computer readable medium.

The computer readable medium is a medium that can be read by the reader of the processor. The computer readable medium is a medium suitable for storing electronic instructions, and capable of being coupled to a computer system bus.

Such computer readable storage medium is, for instance, a disk, a floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

A computer program is stored in the computer readable storage medium. The computer program comprises one or more stored sequence of program instructions.

The computer program is loadable into the processing unit and adapted to cause execution of the method to control the powertrain 7 when the computer program is run by the processing unit.

The controller 9 is connected to a first speed sensor 20 of the vehicle 1, configured to measure a physical quantity that reflects a rotation speed of the primary part.

The controller 9 is connected to a second speed sensor 22 of the vehicle 1, configured to measure a physical quantity that reflects a rotation speed of the secondary part.

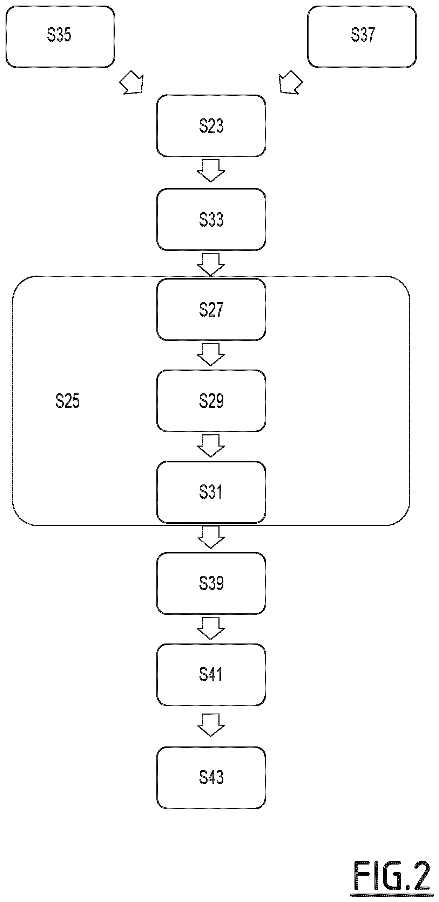

An example of operating of the controller 9 is now described in reference to figure 2, which is a flowchart of an example of a method for controlling the powertrain 7.

The method for controlling the powertrain 7 aims at checking the configuration of the powertrain 7.

Advantageously, the method for controlling the powertrain 7 aims at checking the configuration of the powertrain without another sensor than said first speed sensor 20 and second speed sensor 22 for the controller to determine the dog-clutch configuration during the step of checking S25. In other words, the powertrain 7 preferably does not include another sensor than said first speed sensor 20 and second speed sensor 22 for the controller 9 to determine the dog-clutch configuration during the step of checking S25. For instance, the powertrain 7 is devoid of a fork position sensor or an additional mechanical position sensor.

The absence of another sensor than said first speed sensor 20 and second speed sensor 22 for the controller 9 to determine the dog-clutch configuration limits the number of components of the powertrain 7. Thus, the powertrain 7 is cheaper and the powertrain 7 takes less space in the vehicle 1.

Alternatively, the powertrain 7 does include a fork position sensor 44, and the method is implemented in addition to a checking performed by means of the fork position sensor 44. Therefore, checking of the configuration of the powertrain 7 is more reliable. The method can also enable detecting occurrence of a fault in the fork position sensor 44.

According to the example of figure 2, the method for controlling the powertrain 7 comprises a step of giving order S23 and a step of checking S25. The method is realized when the motor 15 is running.

During the step of giving order S23, the controller 9 gives the order to the dog-clutch to evolve from an initial configuration to a desired configuration, the initial configuration being the engaged configuration, respectively the disengaged configuration and the desired configuration being the disengaged configuration, respectively the engaged configuration.

After the step of giving the order S23, the step of checking S25 is implemented.

Advantageously, the step of checking comprises the step of giving a torque instruction S27, a step of comparing S29 and a step of determining S31.

During the step of giving a torque instruction S27, the controller 9 controls the motor 15 and gives to the motor 15 a torque instruction during a short period of time and then gives to the motor a zero torque instruction so that the rotation speed of the motor 15 decreases suddenly. In other words, the controller 9 gives the torque instruction to the electric motor 15 to briefly and quickly decrease the rotation speed of the primary part 19. More precisely, the controller 9 controls the motor 15 so that the motor 15 generates a short pulse of torque to reduce the speed of the motor 15. The short pulse of torque is negative when the speed of the motor 15 is positive and positive when the speed of the motor 15 is negative. The pulse of torque is preferably very short to avoid any jerk or noise that could be felt by the driver.

After the step of giving the torque instruction S27, the step of comparing S29 is implemented. During the step of comparing S29, the controller 9 compares the evolution of the relative speed between the primary part 19 and the secondary part 21 before and after the step of giving the torque instruction S27.

A first speed difference is determined, which is a difference between the rotation speed of the primary part 19 reflected by the physical quantity measured by the first sensor 20 before applying the torque pulse and the rotation speed of the secondary part 21 reflected by the physical quantity measured by the second sensor 22 before applying the torque pulse.

A second speed difference is determined, which is a difference between the rotation speed of the primary part 19 after applying the torque pulse and the rotation speed of the secondary part 21 after applying the torque pulse.

The controller 9 compares the first speed difference to the second speed difference, during the step of comparing S29.

After the step of comparing S29, the step of determining S31 is implemented.

During the step of determining S31, the controller determines that the dog-clutch is actually in the engaged configuration, when the first difference and the second difference are close to zero. Indeed, when the first difference and the second difference are close to zero, that means that the primary part 19 and the secondary part 21 are secured in rotation.

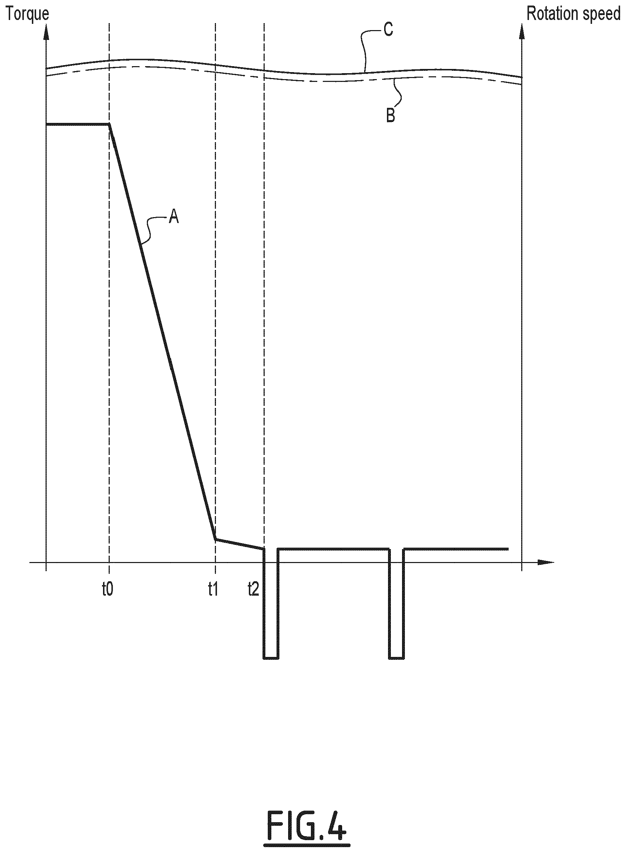

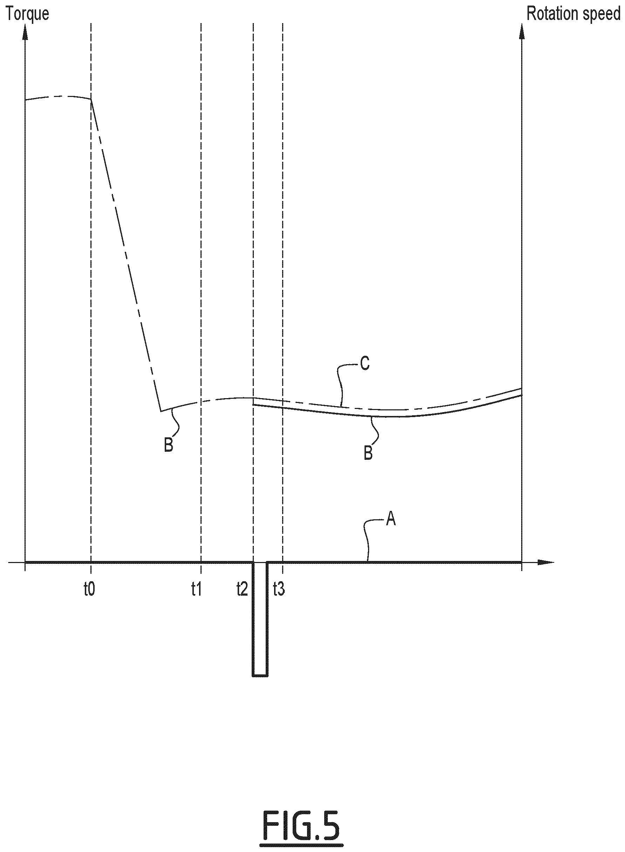

For instance, as shown in the figures 4 and 5 the first difference and the second difference are close to zero. The dog-clutch is in the engaged configuration and the torque pulse, which lowers the rotation speed of the primary part 19, lowers the rotation speed of the secondary part 21 since the primary and the secondary parts are engaged with each other so as to be secured in rotation with each other.

During the step of determining S31, the controller determines that the dog-clutch 17 is actually in the disengaged configuration, when the first difference is close to zero and the second difference is high, in other words very different from zero. Indeed, when the second difference is high means that the primary part 19 and the secondary part 21 are not secured in rotation.

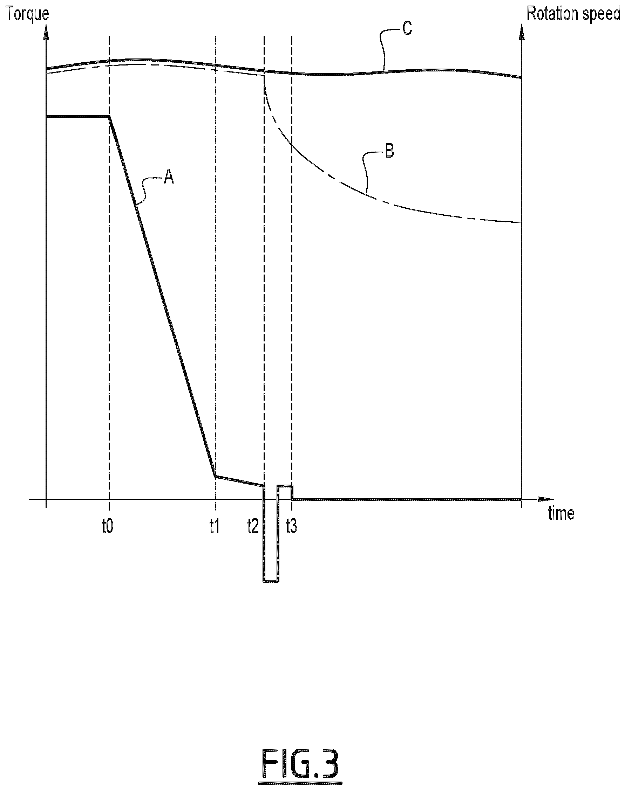

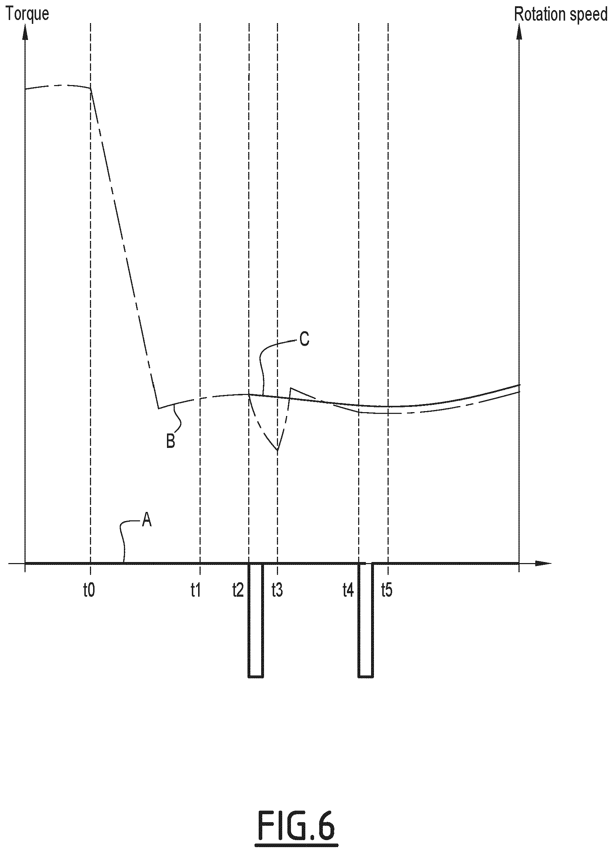

For instance, as shown in figures 3 and 6 the second difference is high. The dog-clutch 17 is in the disengaged configuration and the torque pulse which lowers the rotation speed of the primary part 19 does not affect the rotation speed of the secondary part 21.

In the disengaged configuration, as shown in the figures 3 and 6, the deceleration of the rotation speed of the primary part 19 is higher than the deceleration of the rotation speed of the primary part 19 in the engaged configuration, as shown in the figures 4 and 5, since the motor 15, in the engaged configuration, has to slow the rotation of the primary part 19 and the rotation of the secondary part 21 against their inertia.

The use of the torque pulse enables a quick checking of the configuration of the dog-clutch. Indeed, the torque pulse forces the motor 15 to decelerate in a short time, so that the time to determine, or not, a difference between the rotation speed of the primary part 19 and the rotation speed of the secondary part 21 is shorter than without using a torque pulse.

Advantageously, the method comprises a step of waiting S33 between the step of giving the order S23 and the step of checking S25. The step of waiting S33 lasts for a time that is estimated to be sufficient for the dog-clutch to evolve to the desired configuration. The time is for example comprised between 100 millisecond and 300 millisecond and preferably equal to 200 milliseconds.

The step of waiting S33 ensures that the controller 9 checks the configuration of the dog-clutch 17 only after the configuration has changed and avoids any mistake that would be caused by performing the checking too early, while the dog-clutch 17 did not have sufficient time for reaching the desired configuration.

Advantageously, the method comprises a step of lowering the torque of the motor S35. The step of lowering S35 is implemented before the step of giving the order S25 when the desired configuration is the disengaged configuration.

During the step of lowering S35, as shown in the figures 3 and 4, the torque of the motor 15 is lowered under a maximal torque. The maximal torque is the highest torque for which the disengagement of the secondary part 21 from the primary part 19 is realizable. In other words, the torque of the motor 15 has to be under the maximal torque to enable the evolvement from the engaged configuration to the disengaged configuration.

Advantageously, the method comprises a step of driving S37 the primary part 19 by the electric motor 15. The step of driving S35 is implemented before the step of giving the order S25 when the desired configuration is the engaged configuration.

During the step of driving S35, as shown in the figures 5 and 6, the primary part 19 is driven by the motor so that the rotation speed of the primary part 19 reaches, or is brought closer to, the rotation speed of the secondary part 21. The evolvement from the disengaged configuration to the engaged configuration is enabled once the primary part 19 and the secondary part 21 have the same rotation speed, or have a sufficiently close rotation speed.

Advantageously, the method comprises a step of giving an additional order S39. The step of giving an additional order S39 is implemented after the step of checking S25 when the controller 9 determines that the configuration of the dog-clutch is not the desired configuration. In particular, when the desired configuration is the engaged configuration, the dog clutch 17 can be in an intermediate configuration wherein the primary part 19 and the secondary part 21 are in contact but not actually engaged to each other and are thus not secured in rotation with each other.

During the step of giving the additional order S39, the controller 9 gives again the order to the dog-clutch 17 to evolve to the desired configuration.

A second step of waiting S41 is implemented after the step of giving an additional order S39 and advantageously a second step of checking S43, similar to the step of checking S25, is implemented after the second step of waiting S41. More generally, the controller 9 executes the method in a loop until the wanted configuration is reached.

**Example 1:** A method to control a powertrain 7 of a vehicle 1, the powertrain 7 comprising:
- a dog-clutch 17, comprising:
   - a primary part 19, configured to be driven in rotation by an electric motor 15 of the powertrain 7, and
   - a secondary part 21, configured to drive wheels 4 of the vehicle 1,
- a controller 9, wherein the dog-clutch 17 is configured to, upon receiving an order given by the controller 9, evolve to a desired configuration, between an engaged configuration in which the primary part 19 and the secondary part 21 are engaged with each other so as to be secured in rotation with each other and a disengaged configuration in which the primary part 19 and the secondary part 21 are disengaged from each other, enabling rotation of the primary part 19 and the secondary part 21 relative to each other,
- a first speed sensor 20, configured to measure a physical quantity that reflects a rotation speed of the primary part 19, and
- a second speed sensor 22, configured to measure a physical quantity that reflects a rotation speed of the secondary part 21,

wherein the method comprises a step of giving the order to evolve to the desired configuration, the order being given by the controller 9 to the dog-clutch 17,
characterized in that the method comprises a step of checking S25, by the controller 9, whether the dog-clutch 17 has actually evolved to the desired configuration, as the order to evolve to the desired configuration was given to the dog-clutch 17 by the controller 9, based on the physical quantities measured by the first and the second sensors 21, 22.

**Example 2:** The method of the previous example, wherein the step of checking comprises:
- a step of giving a torque pulse instruction S27 to the electric motor 15 tending to decrease the rotation speed of the primary part 19,
- a step of comparing S29 a first speed difference to a second speed difference,
wherein the first speed difference is a difference between the rotation speed of the primary part 19 reflected by the physical quantity measured by the first sensor 20 and the rotation speed of the secondary part 21 reflected by the physical quantity measured by the second sensor 22 before applying the torque pulse, and wherein the second speed difference is a difference between the rotation speed of the primary part 19 and the rotation speed of the secondary part 21 after applying the torque pulse.

**Example 3:** The method of the previous example, wherein the step of checking S25 comprises:
- a step of determining S31 that the dog-clutch 17 is actually in the engaged configuration, if the first difference and the second difference are similar and tend towards zero, and
- a step of determining S31 that the dog-clutch 17 is actually in the disengaged configuration, if the first difference tends towards zero and the second difference is higher than the first difference.

**Example 4:** The method of any one of the previous examples, wherein the method comprises a step of waiting S33, after the step of giving the order S23, the step of checking being executed after the step of waiting.

**Example 5:** The method of any one of the previous examples, wherein, when the desired configuration is the disengaged configuration, the method comprises, before the step of giving the order 23, a step of lowering S35 a torque of the electric motor 15.

**Example 6:** The method of any one of the previous examples, wherein, when the desired configuration is the engaged configuration, the method comprises, before the step of giving the order S23, a step of driving S37 the primary part 19 by the electric motor 15 so that the rotation speed of the primary part 19 is equal to the rotation speed of the primary part 21.

**Example 7:** The method of any one of the previous examples, wherein when the step of checking S25 has led to determine that the dog-clutch 17 has not actually evolved to the desired configuration, the method comprising:
- a step of giving an additional order S39 to evolve to the desired configuration, the additional order being given by the controller 9 to the dog-clutch 17, and
- after the step of giving the additional order (S39), a step of additional checking S43, by the controller 9, whether the dog-clutch 17 has actually evolved to the desired configuration, as the order to evolve to the desired configuration was given to the dog-clutch 17 by the controller 9, based on the physical quantities measured by the first and the second sensors 20, 22

**Example 8:** The method of any one of the previous examples, wherein the step of checking S25 includes that the controller does not rely on any other sensor than the first speed sensor 20 and the second speed sensor 22 for determining whether the dog-clutch has actually evolved to the desired configuration during the step of checking.

**Example 9:** A computer program product comprising a computer readable medium, having thereon a computer program comprising program instructions, the computer program being loadable into a processing unit and adapted to cause execution of a method of any one of the examples 1 to 8 when the computer program is run by the processing unit.

**Example 10:** A computer readable medium having encoded thereon the computer program of the example 7.

**Example 11:** A controller comprising a computer readable medium according having encoded thereon a computer program comprising program instructions, the computer program being loadable into a -processing unit and adapted to cause execution of a method of any one of the examples 1 to 8 when the computer program is run by the parameter processing unit.

**Example 12:** A powertrain for a vehicle comprising:
- a dog-clutch 17, comprising:
   - a primary part 19, configured to be driven by an electric motor 15 of the powertrain, and
   - a secondary part 21, configured to drive to wheels 4 of the vehicle,
- a controller 9, wherein the dog-clutch is configured to, upon receiving an order given by the controller, evolve to a desired configuration, between an engaged configuration in which the primary part 19 and the secondary part 21 are engaged with each other so as to be secured in rotation with each other and a disengaged configuration in which the primary part 19 and the secondary part 21 are disengaged from each other, enabling rotation of the primary part 19 and the secondary part 21 relative to each other,
- a first speed sensor 20, configured to measure a physical quantity that reflects a rotation speed of the primary part 19, and
- a second speed sensor 22, configured to measure a physical quantity that reflects a rotation speed of the secondary part 21,
characterized in that the powertrain 7 is configured to implement the method according to any one of the claims 1 to 8.

**Example 13:** The powertrain 7 of the previous example, wherein the powertrain does not include another sensor than said first speed sensor 20 and second speed sensor 22 for the controller to determine the dog-clutch 17 configuration during the step of checking.

**Example 14:** The powertrain 7 of any one of the examples 12 or 13, wherein the powertrain is devoid of a fork position sensor

**Example 15:** The powertrain 7 of any one of the previous examples 12 or 13, wherein the powertrain 7 includes a fork position sensor 44.

**Example 16:** A vehicle 1 comprising a powertrain 7 of any one of the examples 12 to 15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method to control a powertrain (7) of a vehicle (1), the powertrain (7) comprising:
- a dog-clutch (17), comprising:
- a primary part (19), configured to be driven in rotation by an electric motor (15) of the powertrain (7), and
- a secondary part (21), configured to drive wheels (4) of the vehicle (1),
- a controller (9), wherein the dog-clutch (17) is configured to, upon receiving an order given by the controller (9), evolve to a desired configuration, between an engaged configuration in which the primary part (19) and the secondary part (21) are engaged with each other so as to be secured in rotation with each other and a disengaged configuration in which the primary part (19) and the secondary part (21) are disengaged from each other, enabling rotation of the primary part (19) and the secondary part (21) relative to each other,
- a first speed sensor (20), configured to measure a physical quantity that reflects a rotation speed of the primary part (19), and
- a second speed sensor (22), configured to measure a physical quantity that reflects a rotation speed of the secondary part (21),
wherein the method comprises a step of giving the order to evolve to the desired configuration, the order being given by the controller (9) to the dog-clutch (17),
**characterized in that** the method comprises a step of checking (S25), by the controller (9), whether the dog-clutch (17) has actually evolved to the desired configuration, as the order to evolve to the desired configuration was given to the dog-clutch (17) by the controller (9), based on the physical quantities measured by the first and the second sensors (21, 22).

2. The method according to the previous claim, wherein the step of checking comprises:
- a step of giving a torque pulse instruction (S27) to the electric motor (15) tending to decrease the rotation speed of the primary part (19), and
- a step of comparing (S29) a first speed difference to a second speed difference, wherein the first speed difference is a difference between the rotation speed of the primary part (19) reflected by the physical quantity measured by the first sensor (20) and the rotation speed of the secondary part (21) reflected by the physical quantity measured by the second sensor (22) before applying the torque pulse, and wherein the second speed difference is a difference between the rotation speed of the primary part (19) and the rotation speed of the secondary part (21) after applying the torque pulse.

3. The method according to the previous claim, wherein the step of checking (S25) comprises:
- a step of determining (S31) that the dog-clutch (17) is actually in the engaged configuration, if the first difference and the second difference are similar and tend towards zero, and
- a step of determining (S31) that the dog-clutch (17) is actually in the disengaged configuration, if the first difference tends towards zero and the second difference is higher than the first difference.

4. The method according to any one of the previous claims, wherein the method comprises a step of waiting (S33), after the step of giving the order (S23), the step of checking being executed after the step of waiting.

5. The method according to the any one of the previous claims, wherein, when the desired configuration is the disengaged configuration, the method comprises, before the step of giving the order (23), a step of lowering (S35) a torque of the electric motor (15).

6. The method according to any one of the previous claims, wherein, when the desired configuration is the engaged configuration, the method comprises, before the step of giving the order (S23), a step of driving (S37) the primary part (19) by the electric motor (15) so that the rotation speed of the primary part (19) is equal to the rotation speed of the secondary part (21).

7. The method according to the any one of the previous claims, wherein when the step of checking (S25) has led to determine that the dog-clutch (17) has not actually evolved to the desired configuration, the method comprising:
- a step of giving an additional order (S39) to evolve to the desired configuration, the additional order being given by the controller (9) to the dog-clutch (17), and
- after the step of giving the additional order (S39), a step of additional checking (S43), by the controller (9), whether the dog-clutch (17) has actually evolved to the desired configuration, as the order to evolve to the desired configuration was given to the dog-clutch (17) by the controller (9), based on the physical quantities measured by the first and the second sensors (20, 22).

8. The method according to any one of the previous claims, wherein the step of checking (S25) includes that the controller does not rely on any other sensor than the first speed sensor (20) and the second speed sensor (22) for determining whether the dog-clutch has actually evolved to the desired configuration during the step of checking.

9. A computer program product comprising a computer readable medium, having thereon a computer program comprising program instructions, the computer program being loadable into a processing unit and adapted to cause execution of a method according to any one of the claims 1 to 8 when the computer program is run by the processing unit.

10. A controller comprising a computer readable medium according having encoded thereon a computer program comprising program instructions, the computer program being loadable into a -processing unit and adapted to cause execution of a method according to any one of the claims 1 to 8 when the computer program is run by the parameter processing unit.

11. A powertrain (7) for a vehicle (1) comprising:
- a dog-clutch (17), comprising:
- a primary part (19), configured to be driven by an electric motor (15) of the powertrain, and
- a secondary part (21), configured to drive to wheels (4) of the vehicle,
- a controller (9), wherein the dog-clutch is configured to, upon receiving an order given by the controller, evolve to a desired configuration, between an engaged configuration in which the primary part (19) and the secondary part (21) are engaged with each other so as to be secured in rotation with each other and a disengaged configuration in which the primary part (19) and the secondary part (21) are disengaged from each other, enabling rotation of the primary part (19) and the secondary part (21) relative to each other,
- a first speed sensor (20), configured to measure a physical quantity that reflects a rotation speed of the primary part (19), and
- a second speed sensor (22), configured to measure a physical quantity that reflects a rotation speed of the secondary part (21),
**characterized in that** the powertrain (7) is configured to implement the method according to any one of the claims 1 to 8.

12. The powertrain (7) according to the previous claim, wherein the powertrain does not include another sensor than said first speed sensor (20) and second speed sensor (22) for the controller to determine the dog-clutch (17) configuration during the step of checking.

13. The powertrain (7) according to any one of claims 11 or 12, wherein the powertrain is devoid of a fork position sensor.

14. The powertrain (7) according to any one of claims 11 or 12, wherein the powertrain (7) includes a fork position sensor (44).

15. A vehicle (1) comprising a powertrain (7) according to any one of claims 12 to 14.

## Amended claims

### Amended claims in accordance with Rule 137(2) EPC.

1. A method to control a powertrain (7) of a vehicle (1), the powertrain (7) comprising:
- a dog-clutch (17), comprising:
- a primary part (19), configured to be driven in rotation by an electric motor (15) of the powertrain (7), and
- a secondary part (21), configured to drive wheels (4) of the vehicle (1),
- a controller (9), wherein the dog-clutch (17) is configured to, upon receiving an order given by the controller (9), evolve to a desired configuration, between an engaged configuration in which the primary part (19) and the secondary part (21) are engaged with each other so as to be secured in rotation with each other and a disengaged configuration in which the primary part (19) and the secondary part (21) are disengaged from each other, enabling rotation of the primary part (19) and the secondary part (21) relative to each other,
- a first speed sensor (20), configured to measure a physical quantity that reflects a rotation speed of the primary part (19), and
- a second speed sensor (22), configured to measure a physical quantity that reflects a rotation speed of the secondary part (21),
wherein the method comprises a step of giving the order to evolve to the desired configuration, the order being given by the controller (9) to the dog-clutch (17),
wherein the method comprises a step of checking (S25), by the controller (9), whether the dog-clutch (17) has actually evolved to the desired configuration, as the order to evolve to the desired configuration was given to the dog-clutch (17) by the controller (9), based on the physical quantities measured by the first and the second sensors (21, 22),
**characterized in that** the step of checking comprises:
- a step of giving a torque pulse instruction (S27) to the electric motor (15) tending to decrease the rotation speed of the primary part (19).

2. The method according to the previous claim, wherein the step of checking comprises:
- a step of comparing (S29) a first speed difference to a second speed difference, wherein the first speed difference is a difference between the rotation speed of the primary part (19) reflected by the physical quantity measured by the first sensor (20) and the rotation speed of the secondary part (21) reflected by the physical quantity measured by the second sensor (22) before applying the torque pulse, and wherein the second speed difference is a difference between the rotation speed of the primary part (19) and the rotation speed of the secondary part (21) after applying the torque pulse.

3. The method according to the previous claim, wherein the step of checking (S25) comprises:
- a step of determining (S31) that the dog-clutch (17) is actually in the engaged configuration, if the first difference and the second difference are similar and tend towards zero, and
- a step of determining (S31) that the dog-clutch (17) is actually in the disengaged configuration, if the first difference tends towards zero and the second difference is higher than the first difference.

4. The method according to any one of the previous claims, wherein the method comprises a step of waiting (S33), after the step of giving the order (S23), the step of checking being executed after the step of waiting.

5. The method according to the any one of the previous claims, wherein, when the desired configuration is the disengaged configuration, the method comprises, before the step of giving the order (23), a step of lowering (S35) a torque of the electric motor (15).

6. The method according to any one of the previous claims, wherein, when the desired configuration is the engaged configuration, the method comprises, before the step of giving the order (S23), a step of driving (S37) the primary part (19) by the electric motor (15) so that the rotation speed of the primary part (19) is equal to the rotation speed of the secondary part (21).

7. The method according to the any one of the previous claims, wherein when the step of checking (S25) has led to determine that the dog-clutch (17) has not actually evolved to the desired configuration, the method comprising:
- a step of giving an additional order (S39) to evolve to the desired configuration, the additional order being given by the controller (9) to the dog-clutch (17), and
- after the step of giving the additional order (S39), a step of additional checking (S43), by the controller (9), whether the dog-clutch (17) has actually evolved to the desired configuration, as the order to evolve to the desired configuration was given to the dog-clutch (17) by the controller (9), based on the physical quantities measured by the first and the second sensors (20, 22).

8. The method according to any one of the previous claims, wherein the step of checking (S25) includes that the controller does not rely on any other sensor than the first speed sensor (20) and the second speed sensor (22) for determining whether the dog-clutch has actually evolved to the desired configuration during the step of checking.

9. A computer program product comprising a computer readable medium, having thereon a computer program comprising program instructions, the computer program being loadable into a processing unit and adapted to cause execution of a method according to any one of the claims 1 to 8 when the computer program is run by the processing unit.

10. A controller comprising a computer readable medium according having encoded thereon a computer program comprising program instructions, the computer program being loadable into a -processing unit and adapted to cause execution of a method according to any one of the claims 1 to 8 when the computer program is run by the parameter processing unit.

11. A powertrain (7) for a vehicle (1) comprising:
- a dog-clutch (17), comprising:
- a primary part (19), configured to be driven by an electric motor (15) of the powertrain, and
- a secondary part (21), configured to drive to wheels (4) of the vehicle,
- a controller (9), wherein the dog-clutch is configured to, upon receiving an order given by the controller, evolve to a desired configuration, between an engaged configuration in which the primary part (19) and the secondary part (21) are engaged with each other so as to be secured in rotation with each other and a disengaged configuration in which the primary part (19) and the secondary part (21) are disengaged from each other, enabling rotation of the primary part (19) and the secondary part (21) relative to each other,
- a first speed sensor (20), configured to measure a physical quantity that reflects a rotation speed of the primary part (19), and
- a second speed sensor (22), configured to measure a physical quantity that reflects a rotation speed of the secondary part (21),
**characterized in that** the powertrain (7) is configured to implement the method according to any one of the claims 1 to 8.

12. The powertrain (7) according to the previous claim, wherein the powertrain does not include another sensor than said first speed sensor (20) and second speed sensor (22) for the controller to determine the dog-clutch (17) configuration during the step of checking.

13. The powertrain (7) according to any one of claims 11 or 12, wherein the powertrain is devoid of a fork position sensor.

14. The powertrain (7) according to any one of claims 11 or 12, wherein the powertrain (7) includes a fork position sensor (44).

15. A vehicle (1) comprising a powertrain (7) according to any one of claims 12 to 14.
